# FASCICULE DE BREVET EUROPEEN

(11) **EP 1 433 988 B1**
(45) Date de publication et mention de la délivrance du brevet: **14.12.2005**
(21) Numéro de dépôt: 02447279.7
(22) Date de dépôt: 24.12.2002
(51) Int. Cl.: F16K 41/02, F16K 5/06

(54) **Vanne de régulation**
Steuerventil
Regulation valve

(43) Date de publication de la demande: 30.06.2004
(73) Titulaire: Techspace Aero S.A., 4041 Herstal (BE)
(72) Inventeur: Promper, Christophe, 4802 Heusy (BE)
(74) Mandataire: Van Malderen, Joelle

(56) Documents cités:
- EP-A- 1 052 439
- GB-A- 2 340 899
- US-A- 4 592 558
- US-A- 5 056 758

## Description

### Objet de l'invention

La présente invention se rapporte à une vanne de régulation, et en particulier vanne à boisseau, qui intégre un arbre à étancher qui présente un système de double barrière d'étanchéité.

### Etat de la technique

Beaucoup d'équipements utilisés dans l'aéronautique et plus particulièrement dans l'aérospatiale sont des systèmes pneumatiques ou hydrauliques utilisant des vannes de régulation présentant une étanchéité par rapport à un support mobile. Un exemple connu de telles vannes est la vanne à boisseau sphérique.

Typiquement, une vanne à boisseau sphérique comprend essentiellement un corps de vanne définissant une chambre essentiellement cylindrique, avec une entrée et une sortie. La vanne comprend en outre un obturateur, situé dans le corps de la vanne et se présentant sous la forme d'une calotte sphérique (boisseau) avec une ouverture, la forme de ladite calotte sphérique étant essentiellement complémentaire de celle de la chambre. Cet obturateur est en outre, à une de ses extrémités, en général dans sa partie supérieure, pourvu d'un arbre ou d'une tige relié à un actionneur et par l'intermédiaire duquel il peut être mis en rotation pour ouvrir ou fermer la vanne. On définit pour une telle vanne une position complètement ouverte, dans laquelle l'obturateur est orienté par rapport à la chambre de façon à ce que son ouverture soit alignée avec l'entrée et la sortie de la chambre et à autoriser ainsi l'écoulement de fluide. On définit également pour cette vanne une position fermée dans laquelle l'obturateur est orienté par rapport à la chambre de façon telle que cet alignement ouverture de l'obturateur/entrée et sortie de la chambre n'existe pas, l'obturateur constituant ainsi une barrière à l'écoulement de fluide à travers la vanne.

Habituellement, un système d'étanchéité est prévu dans ces vannes de manière à assurer l'étanchéité de la zone amont vis-à-vis de la zone aval par rapport à la vanne, lorsque la vanne est fermée. Le rôle de ce système est particulièrement important dans le cas où dans la zone amont circule un fluide à basse pression ou dans le cas où le vide est maintenu dans cette zone, tandis qu'en zone aval circule un fluide à haute pression, ou inversement. Ce système d'étanchéité se présente généralement sous la forme d'un joint dit « principal » qui est fixé de manière rigide au niveau du boisseau et permet d'assurer l'étanchéité de l'amont de la vanne vis-à-vis de l'aval de celle-ci, lorsque la vanne est fermée. Lors de l'ouverture de la vanne, le joint principal entre en contact avec la surface de contact sphérique du boisseau.

Le système d'étanchéité de la vanne comprend également habituellement un joint supplémentaire, dit « joint statique », situé au niveau de l'arbre de la vanne à boisseau et dont la fonction est d'assurer l'étanchéité de la vanne vis-à-vis de l'extérieur.

Afin d'augmenter encore l'étanchéité de telles vannes vis-à-vis de l'extérieur, il a été proposé d'utiliser un système ou dispositif à double étanchéité au niveau de l'arbre. Deux joints d'étanchéité, un joint primaire et un joint secondaire, sont ainsi disposés en série l'un au-dessus de l'autre de manière à étancher les faces de l'arbre contre lesquelles ils s'appuient. Chaque joint se présente avantageusement sous la forme d'un joint en U, c'est-à-dire un joint circulaire ou torique présentant en section la forme d'un U. Les joints primaire et secondaire délimitent ainsi respectivement une cavité primaire et une cavité secondaire.

Selon l'état de la technique, chacun de ces joints primaire et secondaire est disposé dans un couvercle constitué d'une pièce mécanique. Ces joints sont donc individuellement supportés par des pièces mécaniques volumineuses, souvent solidarisées directement au carter à l'aide de moyens connus en soi, tels que des écrous vissées.

De manière particulièrement avantageuse, tout fluide présent entre les deux joints sera éliminé via des moyens de collecte de fuites vers l'extérieur. De cette façon, l'étanchéité de la vanne vis-à-vis de l'extérieur est améliorée.

Les documents US-A-5,056,758 et EP-A-1 052 439 décrivent des vannes à boisseau avec un système de double barrière d'étanchéité au niveau de l'arbre dont les joints sont maintenus en place par un couvercle. Les deux joints du système de double étanchéité sont situés l'un au dessus de l'autre le long de l'arbre. En outre, le couvercle de la vanne décrite dans le document US-A-5,056,758 comprend un canal apte à récolter tout liquide de fuite présent entre les joints du système de double barrière d'étanchéité.

Par ailleurs, le document US-A-4,592,558 décrit des joints pour assurer l'étanchéité entre l'arbre d'une vanne et le couvercle destiné à recevoir ledit arbre. Ce document décrit plus particulièrement des joints circulaires présentant en section une forme de U, lesdits joints étant séparés par une entretoise en forme de T.

Le document GB-A-2 340 899 décrit quant à lui un double joint utilisable dans un système d'étanchéité et définissant une cavité primaire et une cavité secondaire, ce double joint ayant la particularité d'être pourvu de moyens de contrainte se présentant sous la forme d'une feuille métallique située à l'intérieur chacune des cavités.

### Buts de l'invention

La présente invention vise à proposer de simplifier le design d'une vanne à boisseau présentant un système de double étanchéité pour assurer l'étanchéité de la vanne vis-à-vis de l'extérieur, tout en maintenant les avantages existants des solutions de l'état de la technique.

En particulier, la présente invention vise également à proposer une solution dans laquelle une collecte de fuites serait maintenue.

### Principaux éléments caractéristiques de la présente invention

La présente invention se rapporte à une vanne à boisseau comprenant un corps de vanne, un obturateur actionnable et se présentant sous la forme d'une calotte sphérique munie d'un arbre mobile en rotation et/ou en translation, ladite vanne comprenant en outre un système de double barrière d'étanchéité au niveau dudit arbre, ladite vanne étant caractérisée en ce que les joints faisant fonction de double barrière d'étanchéité sont maintenus en place par rapport à l'arbre à l'aide d'un seul et même couvercle constitué d'une seule et même pièce mécanique. Ceci permet de manière judicieuse de simplifier le montage et la réalisation de ce type de vanne à boisseau à double étanchéité.

Ces joints sont de préférence des joints réalisés en matériaux polymériques ou élastomères.

Selon une première forme d'exécution, le système de double barrière d'étanchéité est constitué d'un joint primaire et d'un joint secondaire qui sont disposés en série l'un au-dessus de l'autre le long de l'arbre.

De préférence, lesdits joints primaire et secondaire sont des joints circulaires présentant en section une forme de U et définissant respectivement une cavité primaire et une cavité secondaire.

De préférence, lesdits joints primaire et secondaire sont séparés par une entretoise, et de préférence une entretoise en forme de T dont le pied est situé à l'intérieur de l'une desdites cavités. Cette entretoise contribue à maintenir en place les deux joints primaire et secondaire.

Avantageusement, dans la présente invention, des moyens de contrainte pour appuyer les jointes, plus précisément les lèvres des joints, sur les faces à étancher de l'arbre de la vanne, sont disposés au pied de l'entretoise.

Ces moyens de contrainte font fonction de ressort et se présentent par exemple sous la forme d'une feuille métallique située à l'intérieur de la cavité centrale du joint et en particulier du joint primaire.

Ces moyens de contrainte permettent en outre d'agir dans le cas où les contraintes de contact seraient trop importantes au niveau du joint secondaire en évitant ainsi l'écrasement de celui-ci.

Selon une deuxième forme d'exécution, la double barrière d'étanchéité est constituée par un double joint présentant de préférence deux cavités, une cavité primaire et une cavité secondaire, situées de préférence l'une au-dessus de l'autre le long de l'arbre de la vanne.

Avantageusement, ce double joint fait fonction de double joint U ou joint W.

Dans cette forme exécution, comme dans la première forme d'exécution, des moyens de contrainte se présentant de préférence sous la forme d'une feuille métallique sont situés à l'intérieur d'au moins une desdites cavités du double joint.

Dans les deux formes préférées d'exécution de la présente invention, un canal apte à récolter tout liquide de fuite est présent dans le couvercle protégeant le système de double barrière d'étanchéité.

Avantageusement, dans la seconde forme d'exécution, la vanne comprend en outre un canal supplémentaire pour récolter le liquide de fuite, ledit canal étant tel qu'il traverse le double joint d'étanchéité, de préférence au niveau de la jonction entre les cavités primaire et secondaire, et qu'il communique avec le canal apte à récolter le liquide de fuite situé au niveau du couvercle.

De cette façon, la seconde forme d'exécution présente l'avantage de réduire encore le nombre de pièces tout en maintenant la double étanchéité et la collecte de fuite.

### Description des figures

La figure 1 représente une vue générale d'une vanne à boisseau selon l'invention.

La figure 2 représente une vue détaillée du dispositif d'étanchéité d'une vanne à boisseau selon une première forme d'exécution de la présente invention.

La figure 3 représente une vue détaillée du dispositif d'étanchéité d'une vanne à boisseau selon une seconde forme d'exécution de la présente invention.

### Description détaillée des diverses formes d'exécution

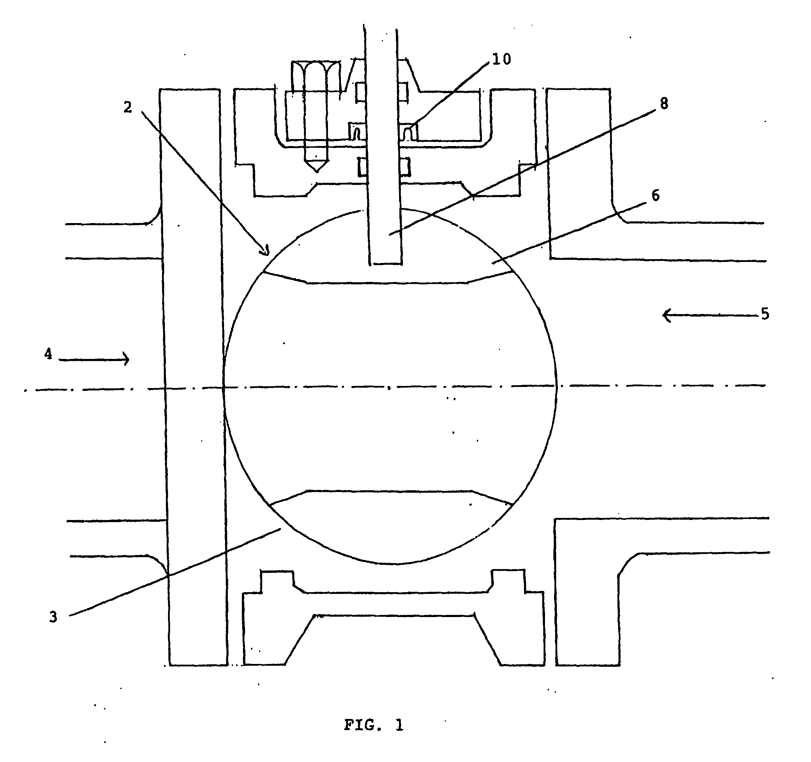

La figure 1 représente une vanne 1 à boisseau selon l'invention. Cette vanne 1 comprend typiquement un corps de vanne 2 définissant une chambre 3 essentiellement cylindrique, avec une entrée 4 et une sortie 5. La vanne 1 comprend en outre un obturateur 6, situé dans le corps 2 de la vanne et se présentant sous la forme d'une calotte sphérique (boisseau) avec une ouverture 7, la forme de ladite calotte sphérique étant essentiellement complémentaire de celle de la chambre 3. Cet obturateur 6 est en outre dans sa partie supérieure pourvu d'un arbre ou une tige 8 relié à un actionneur par l'intermédiaire duquel il peut être mis en rotation pour ouvrir ou fermer la vanne.

On définit pour une telle vanne une position complètement ouverte, dans laquelle l'obturateur 6 est orienté par rapport à la chambre de façon telle que son ouverture est alignée avec l'entrée et la sortie de la chambre et à autoriser ainsi l'écoulement de fluide.

On définit également pour cette vanne 1 une position fermée dans laquelle l'obturateur est orienté par rapport à la chambre de façon telle que cet alignement ouverture 5 de l'obturateur 6/entrée 4 et sortie 5 de la chambre 3 n'existe pas, l'obturateur 6 constituant ainsi une barrière à l'écoulement de fluide à travers la vanne 1.

La vanne 1 selon l'invention comprend un système d'étanchéité au niveau de l'arbre 8 dont la fonction est d'assurer l'étanchéité de la vanne vis-à-vis de l'extérieur. C'est précisément ce système d'étanchéité, qui constitue en fait une double barrière d'étanchéité au niveau de l'arbre 8, qui est l'objet de la présente invention.

De préférence, la vanne comprend par ailleurs un système d'étanchéité supplémentaire qui est destiné à assurer l'étanchéité entre la zone amont vis-à-vis de la zone aval par rapport à la vanne, lorsque la vanne est fermée.

Le système de double étanchéité de la vanne 1 selon la présente invention comprend un ensemble de deux joints 10, 10' fixés de manière rigide sur l'arbre ou la tige d'actionnement 8 de l'obturateur 6.

On définit plus précisément un joint primaire 10 et un joint secondaire 10'. Pour des raisons de clarté, seul un de ces joints, le joint primaire portant la référence 10, a été représenté sur la figure 1.

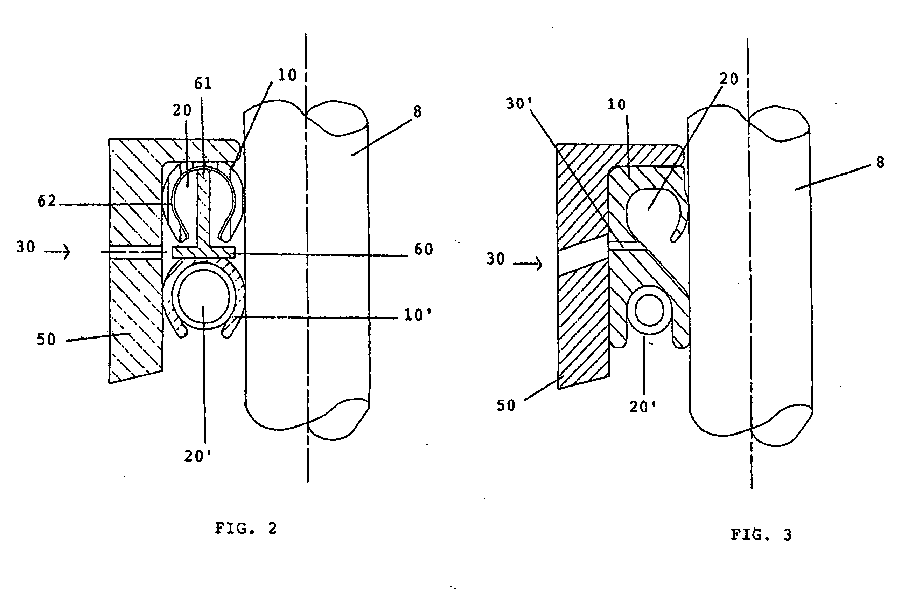

Selon une première forme d'exécution détaillée à la figure 2, le joint primaire 10 et le joint secondaire 10' correspondent à deux joints distincts qui sont disposés en série le long de l'arbre 8.

Chaque joint 10,10' se présente avantageusement sous la forme d'un joint en U, c'est-à-dire un joint circulaire ou torique présentant en section la forme d'un U. Les joints primaire et secondaire délimitent ainsi chacun respectivement une cavité primaire 20 et une cavité secondaire 20'.

Dans l'état de la technique, chaque joint primaire 10 et secondaire 10' est séparément (individuellement) disposé dans un « couvercle » constitué d'une pièce mécanique et les couvercles sont solidarisés directement au carter à l'aide de moyens connus en soi, tels que des écrous vissés.

Ainsi qu'illustré sur la Figure 2, dans la présente invention au contraire, les joints primaire 10 et secondaire 10' sont supportés et maintenus en place par un seul et même couvercle référencé 50, et non plus par deux couvercles distincts comme dans l'état de la technique. Ceci permet de manière judicieuse de simplifier le montage et la réalisation de ce type de vanne à boisseau à double étanchéité.

Ces joints 10,10' sont de préférence des joints toriques réalisés en matériau polymérique ou en élastomère. Selon une forme d'exécution particulière, ces joints peuvent être des joints circulaires présentant en section une forme de U.

De manière particulièrement avantageuse, ce couvercle 50 présente un canal 30 destiné à récolter tout éventuel liquide de fuite. De préférence, ce canal 30 est situé au niveau (à la hauteur) des deux joints primaire et secondaire.

Selon une forme d'exécution préférée, on dispose entre les deux joints 10,10' une entretoise 60, par exemple se présentant sous la forme d'un T, et qui contribue à maintenir en place les deux joints primaire et secondaire.

Avantageusement, on dispose selon une forme d'exécution encore préférée, autour du pied 61 de l'entretoise 60, des moyens de contrainte se présentant par exemple sous la forme d'une feuille métallique 62. Ces moyens de contrainte 62 font fonction de ressort et agissent pour appuyer les lèvres des joints contre les faces à étancher de l'arbre de la vanne. En outre, ces moyens de contraintes sont capables d'agir comme répartiteur de contrainte dans le cas où les contraintes de contact seraient trop importantes au niveau du joint secondaire 10' en évitant ainsi l'écrasement de celui-ci.

Selon une seconde forme d'exécution préférée de l'invention illustrée à la figure 3, la présente invention se propose d'utiliser un système à double étanchéité muni d'un seul couvercle 50 et où un seul double joint 10 assure la fonction de double barrière d'étanchéité. Dans cette forme d'exécution, les joints primaire 10 et secondaire 10' constituent donc un seul et même double joint 10.

Avantageusement, ce double joint 10 présente deux cavités, une cavité primaire 20 et une cavité secondaire 20', et fait fonction de double joint U ou joint W.

En outre, comme dans la première forme d'exécution, la vanne comprend dans le couvercle 50 un canal 30 pour collecter les éventuelles fuites de fluide.

De manière particulièrement avantageuse, le double joint 10 comprend lui-même un canal 30' pour récolter tout liquide de fuite. De préférence, ce canal 30' est situé au niveau de la jonction entre la cavité primaire 20 et la cavité secondaire 20'.

De préférence, la configuration relative des canaux 30 et 30' est telle que le canal 30' se prolonge et traverse le couvercle 50.

De préférence, on prévoit de disposer des moyens de contrainte se présentant sous une feuille métallique 62 et située à l'intérieur de la cavité 20 du double joint 10 (cavité centrale).

Cette seconde forme d'exécution présente l'avantage de réduire encore le nombre de pièces tout en maintenant la double étanchéité au niveau de l'arbre de la vanne et la collecte de fuite.

## Revendications

1. Vanne à organe d'obturation rotatif comprenant un corps de vanne (2), un obturateur (6) actionnable et se présentant sous la forme d'une calotte sphérique munie d'un arbre (8) mobile en rotation, ladite vanne comprenant en outre au niveau dudit arbre (8) un système de double barrière d'étanchéité, formée par un double joint (10) maintenu en place par rapport audit arbre (8) à l'aide d'un couvercle (50) présentant un canal (30) apte à récolter tout liquide de fuite présent entre les joints du système de double barrière d'étanchéité, ledit double joint (10) présentant deux cavités, une cavité primaire (20) et une cavité secondaire (20'),
ladite vanne étant **caractérisée en ce que** le système de double barrière d'étanchéité comprend en outre un canal supplémentaire (30') pour récolter le liquide de fuite, ledit canal (30') étant tel qu'il traverse le système de double étanchéité et qu'il communique avec le canal (30) apte à récolter le liquide de fuite situé au niveau du couvercle.

2. Vanne selon la revendication 1, **caractérisé en ce que** le canal supplémentaire (30') traverse le système de double étanchéité au niveau de la jonction entre les cavités primaire (20) et secondaire (20').

3. Vanne selon la revendication 1 ou 2, **caractérisée en ce que** le double joint (10) est maintenu en place par rapport audit arbre (8) à l'aide d'un seul et même couvercle (50).

4. Vanne selon la revendication 1 ou 2, **caractérisée en ce que** les joints du système de double barrière d'étanchéité sont constitués d'un joint primaire (10) et d'un joint secondaire (10') qui sont disposés en série l'un au-dessus de l'autre le long de l'arbre (8).

5. Vanne selon l'une des revendications précédentes, **caractérisée en ce que** des moyens de contrainte se présentant de préférence sous la forme d'une feuille métallique (62) sont situés à l'intérieur d'au moins une desdites cavités (20) du double joint (10).

6. Vanne selon l'une des revendications précédentes, **caractérisée en ce que** cette vanne est une vanne à boisseau.

## Patentansprüche

1. Ventil mit einem drehbaren Verschluss, das aus einem Ventilkörper (2) und einem bedienbaren Verschluss (6) besteht, der als kugelförmiger Deckel ausgebildet und mit einer in Drehrichtung beweglichen Welle (8) ausgestattet ist. Das besagte Ventil umfasst ferner auf Höhe der o.g. Welle (8) ein System mit zwei Dichtungsschichten, das durch eine Doppeldichtung (10) gebildet wird, die wiederum im Verhältnis zur o.g. Welle (8) mit Hilfe eines Deckels (50) in ihrer Position gehalten wird; dieser Deckel (50) verfügt über einen Kanal (30), der in der Lage ist, die gesamte entweichende Flüssigkeit aufzunehmen, die zwischen den Dichtungen des Systems mit zwei Dichtungsschichten vorhanden ist. Die o.g. Doppeldichtung (10) verfügt über zwei Hohlräume, einen primären Hohlraum (20) und einen sekundären Hohlraum (20'). Das o.g. Ventil zeichnet sich **dadurch** aus, dass das System mit zwei Dichtungsschichten ferner über einen zusätzlichen Kanal (30') verfügt, der die entweichende Flüssigkeit aufnehmen kann; dieser o.g. Kanal (30') ist so ausgeführt, dass er quer durch das System mit den zwei Dichtungsschichten führt und dass er mit dem Kanal (30) verbunden ist, der in der Lage ist, die entweichende Flüssigkeit auf Höhe der Deckel aufzunehmen.

2. Ventil gemäß Anspruch 1, **dadurch gekennzeichnet, dass** der zusätzliche Kanal (30') auf der Höhe der Dichtung zwischen dem primären (20) und dem sekundären (20') Hohlraum quer durch das System mit den zwei Dichtungsschichten verläuft.

3. Ventil gemäß Anspruch 1 oder 2, **dadurch gekennzeichnet, dass** die Doppeldichtung (10) im Verhältnis zu der o.g. Welle (8) mit Hilfe eines einzigen Deckels (50) in ihrer Position gehalten wird.

4. Ventil gemäß Anspruch 1 oder 2, **dadurch gekennzeichnet, dass** die Dichtungen des Systems mit zwei Dichtungsschichten aus einer primären (10) und einer sekundären (10') Dichtung bestehen, die in einer Reihe, eine oberhalb von der anderen, entlang der Welle (8) angeordnet sind.

5. Ventil gemäß einem der oben stehenden Ansprüche, **dadurch gekennzeichnet, dass** die Spannvorrichtungen, die vorzugsweise in Form einer Metallfolie (62) ausgebildet sind, sich mindestens im Inneren eines der o.g. Hohlräume (20) der Doppeldichtung (10) befinden.

6. Ventil gemäß einem der oben stehenden Ansprüche, **dadurch gekennzeichnet, dass** es sich bei diesem Ventil um ein Ventil mit Absperrschieber handelt.

## Claims

1. Valve with a rotary shutter element, comprising a valve body (2) and a shutter (6) that can be actuated and is in the form of a segment of a sphere provided with a mobile shaft (8) in rotation, said valve also comprising at the level of said shaft (8) a double-barrier sealing system formed by a double joint (10) that is maintained in place relative to said shaft (8) by means of a lid (50) having a channel (30) that is capable of collecting any leaking liquid present between the joints of the double-barrier sealing system, said double joint (10) having two cavities, a primary cavity (20) and a secondary cavity (20'),
said valve being **characterised in that** the double-barrier sealing system moreover comprises an additional channel (30') for collecting the leaking liquid, said channel (30') being such that it passes through the double sealing system and that it communicates with the channel (30) that can collect the leaking liquid located at the level of the lid.

2. Valve according to Claim 1, **characterised in that** the additional channel (30') passes through the double sealing system at the level of the junction between the primary (20) and secondary (20') cavities.

3. Valve according to Claim 1 or 2, **characterised in that** the double joint (10) is maintained in place relative to said shaft (8) by means of one single lid (50).

4. Valve according to Claim 1 or 2, **characterised in that** the joints of the double-barrier sealing system consist of a primary joint (10) and of a secondary joint (10') arranged in series, one above the other along the shaft (8).

5. Valve according to any one of the preceding claims, **characterised in that** a pressure means preferably in the form of a metal sheet (62) is located inside at least one of said cavities (20) of the double joint (10).

6. Valve according to any one of the preceding claims, **characterised in that** this valve is a plug valve.
